# EUROPEAN PATENT APPLICATION

(11) **EP 3 082 039 A1**
(43) Date of publication of application: **19.10.2016**
(21) Application number: 15871673.8
(22) Date of filing: 17.07.2015
(51) Int. Cl.: G06F 9/48

(54) **BUSINESS PROCESS MANAGEMENT NOTIFICATION SERVICE PROCESSING METHOD AND BUSINESS PROCESS MANAGEMENT ENGINE**

(30) Priority: 27.12.2014 CN 201410829508
(71) Applicant: Huawei Technologies Co. Ltd., Shenzhen, Guangdong 518129 (CN)
(72) Inventor: ZHOU, Junjie, Shenzhen Guangdong 518129 (CN); WANG, Shijun, Shenzhen Guangdong 518129 (CN)
(74) Representative: Pfenning, Meinig & Partner mbB
(86) International application number: PCT/CN2015/084361
(87) International publication number: WO 2016/101599

(57) **Abstract**

The present invention discloses a notification service processing method for business process management and a business process management engine. The method includes: when a business process starts running, parsing a definition of the process, and when execution reaches a business activity, creating a business process instance for the business activity, where an event listener is configured for the business activity, and at least one notification service is configured for the event listener; and parsing, based on the created business process instance, the event listener configured for the business activity, and when the event listener learns by listening that a notification service trigger condition is met, invoking the notification service configured for the event listener, to send a notification message to a corresponding party. In this way, complexity of notification service processing in business process management is reduced.

## Description

### TECHNICAL FIELD

The present invention relates to the field of computers, and in particular, to a notification service processing method for business process management and a business process management engine.

### BACKGROUND

Business process management (Business Process Management, BPM) is a general term of a middleware suite related to management of business processes. Business process modeling is generally performed in an integrated development environment (integrated development environment, IDE), where in the IDE, complex process defining can be implemented in a zero coding way to construct a process by means of dragging, and a BPM engine and a process management console are responsible for driving the business process. The foregoing BPM engine and the foregoing process management console can be embedded into a business system to provide an upper-layer business with application platform interfaces (application platform interface, API) for process modeling and engine process instance scheduling, so as to help the business complete choreography, deployment, operation, and scheduling of its processes, thereby creating, for enterprises, various processes conforming to business development of the enterprises.

Business processes generally have the following characteristics: 1. A notification generally needs to be sent to an owner person or an owner system when a business completes an activity of a process. For example, the notification needs to the sent to an owner person when a process instance is successfully created and started, or when a business service is successfully invoked, or when a new human task is successfully assigned. 2. When an employee submits an electronic leave application workflow to a manager, the manager receives an electronic workflow email and an SMS message indicating that the workflow needs approval, and simultaneously, the employee receives an email to learn in real time which step this electronic leave application workflow has gone to.

At present, generally, a service task (serviceTask) is visually configured after a related activity, for sending a notification. For example, the related activity may be a "start" activity or an "approve" activity. In addition, multiple "preconfigured services", for example, "email", "SMS", and "instant messaging", may be included in the service task. However, the service task is treated by the BPM engine as a normal activity for scheduling, while all service tasks require corresponding database operations. In this case, performance needs to be significantly compromised, which deteriorates BPM performance.

### SUMMARY

Regarding the foregoing problem, an objective of the present invention is to provide a notification service processing method for business process management and a business process management engine that improve BPM performance.

According to a first aspect, the present invention provides a notification service processing method for business process management, where the method is applied to a business process management engine, and the method includes:
when a business process starts running, parsing a definition of the process, and when execution reaches a business activity, creating a business process instance for the business activity, where an event listener is configured for the business activity, and at least one notification service is configured for the event listener; and
parsing, based on the created business process instance, the event listener configured for the business activity, and when the event listener learns by listening that a notification service trigger condition is met, invoking the notification service configured for the event listener, to send a notification message to a corresponding party.

With reference to the first aspect, in a first possible implementation manner of the first aspect, before the business process starts running, the method further includes: defining the business process, and performing activity attribute defining for a business activity in the business process, where the defined activity attribute is specifically an event listener, and at least one notification service is configured for the event listener.

With reference to the first possible implementation manner of the first aspect, in a second possible implementation manner of the first aspect, objects to which the event listener configured for the business activity listens include a creation event, a start event, or a completion event of the process, a creation event, an execution event, or a completion event of the activity, and a creation event, a completion event, or a timeout event of a human task; or an exception event of the process, and an exception event or a compensation event of the activity.

With reference to the first possible implementation manner of the first aspect, in a third possible implementation manner of the first aspect, the activity attribute is defined by using the following means: the extensible markup language, the C programming language, a webpage service, or a business-defined service.

According to a second aspect, a business process management engine provided by the present invention includes:
a parsing module, configured to: when a business process starts running, parse a definition of the process, and when execution reaches a business activity, create a business process instance for the business activity, where an event listener is configured for the business activity, and at least one notification service is configured for the event listener; and
a notification service processing module, configured to: parse, based on the created business process instance, the event listener configured for the business activity, and when the event listener learns by listening that a notification service trigger condition is met, invoke the notification service configured for the event listener, to send a notification message to a corresponding party.

With reference to the first aspect, in a first possible implementation manner of the second aspect, the business process management engine includes a definition module, configured to: define the business process, and perform activity attribute defining for a business activity in the business process, where the defined activity attribute is specifically an event listener, and at least one notification service is configured for the event listener.

With reference to the first possible implementation manner of the second aspect, in a second possible implementation manner of the second aspect, objects to which the event listener configured for the business activity listens include a creation event, a start event, or a completion event of the process, a creation event, an execution event, or a completion event of the activity, and a creation event, a completion event, or a timeout event of a human task; or an exception event of the process, and an exception event or a compensation event of the activity.

With reference to the first possible implementation manner of the second aspect, in a third possible implementation manner of the second aspect, the activity attribute is defined by using the following means: the extensible markup language, the C programming language, a webpage service, or a business-defined service.

According to the notification service processing method for business process management in the solutions of the embodiments of the present invention, an extension activity attribute is added for a business activity, an event listener is used as the foregoing extension activity attribute, and a notification service is directly configured for the event listener. In this way, notification service processing can be implemented. In addition, because the event listener is used as an attribute of a business activity rather than an independent business activity, a BPM engine does not need to perform process instantiation for the event listener or invoke data of a database, thereby reducing difficulty of the engine in notification service processing, and improving performance of business process processing.

### BRIEF DESCRIPTION OF DRAWINGS

To describe the technical solutions in the present invention more clearly, the following briefly introduces the accompanying drawings required for describing the implementation manners. Apparently, the accompanying drawings in the following description show merely some implementation manners of the present invention, and a person of ordinary skill in the art may still derive other drawings from these accompanying drawings without creative efforts.
FIG. 1 is a schematic structural diagram of a business process management engine according to an embodiment of the present invention;
FIG. 2 is a schematic flowchart of a notification service processing method for business process management according to an embodiment of the present invention; and
FIG. 3 is a schematic diagram of a specific example of notification service processing of business process management according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

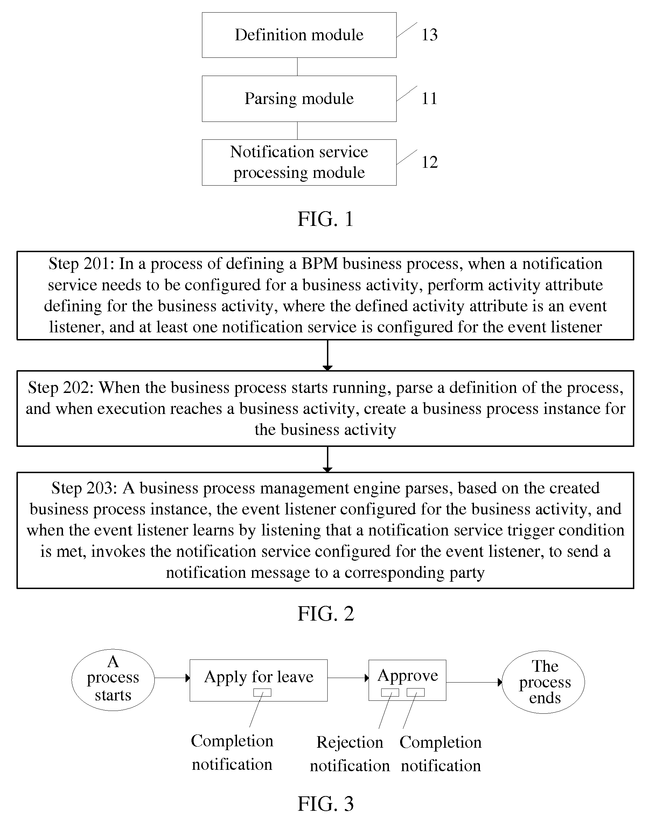

As shown in FIG. 1, a business process management engine in the present invention includes:
a parsing module 11, configured to: when a business process starts running, parse a definition of the process, and when execution reaches a business activity, create a business process instance for the business activity, where an event listener is configured for the business activity, and at least one notification service is configured for the event listener; and
a notification service processing module 12, configured to: parse, based on the created business process instance, the event listener configured for the business activity, and when the event listener learns by listening that a notification service trigger condition is met, invoke the notification service configured for the event listener, to send a notification message to a corresponding party.

Further, as shown in FIG. 1, the business process management engine further includes: a definition module 13, configured to: define the business process, and perform activity attribute defining for a business activity in the business process, where the defined activity attribute is specifically an event listener, and at least one notification service is configured for the event listener.

As shown in FIG. 2, a notification service processing method for business process management in the present invention includes:
Step 201: In a process of defining a BPM business process, when a notification service needs to be configured for a business activity, perform activity attribute defining for the business activity, where the defined activity attribute is an event listener, and at least one notification service is configured for the event listener. Objects to which the event listener configured for the foregoing business activity listens include a creation event, a start event, or a completion event of the process, a creation event, an execution event, or a completion event of the activity, and a creation event, a completion event, or a timeout event of a human task; or an exception event of the process, and an exception event or a compensation event of the activity.

Specifically, the event listener may be an extension element of the BPMN specification. After the event listener is configured, a mounting event may be dragged to mount the event listener to the needing business activity defined in the BPM process. There are many methods for configuring the event listener, such as, the extensible markup language XML, the C programming language, a webpage service, or a business-defined service. XML is used for description herein.

```
                <htextn:taskListener
          class="com.huawei.bpm.bpmn.event.listener.
                ServiceActionDelegator" event= "CRATED">
                <bpmn2extn:listenerActionServiceConfig
                    implementation="java:llcom.xxx.SendMessage"
          operationRef="send-OPERATION4"
                    bpmn2extn:executionstyle= "Sync"
          bpmn2extn:errorHandling="Rollback"
                    bpmn2extn:order="0" name="Action0">
                    <bpmn2extn:script id="FORMALEXPRESSION4"
                language= "http://groovy.codehaus.org/groovy"><![CDATA[return
                true;]]></bpmn2extn: script>
                    <bpmn2extn:ioSpecification id= "IOSPECIFICATION7">
                         <bpmn2:dataInput id="DATAINPUT1"
                             bpmn2extn:variableName="messageInfo"
          itemSubjectRef="ITEMDEFINITION2" same= "messageInfo"/>
                         <bpmn2:dataOutput id="DATAOUTPUT1"
                             bpmn2extn:variableName="send_result"
          itemSubjectRef= "ITEMDEFINITION2"
                             name=" send_result"/>
                         <bpmn2:inputSet id="INPUTSET7">
           <bpmn2:dataInputRefs>DATAINPUT1</bpmn2:dataInputRefs>
                         </bpmn2:inputSet>
                         <bpmn2:outputSet id="OUTPUTSET7">
           <bpmn2:dataOutputRefs>DATAOUTPUT1</bpmn2:dataOutputRefs>
                         </bpmn2:outputSet>
                    </bpmn2extn:ioSpecification>
           </bpmn2extn:ioSpecification>
                             <bpmn2extn:dataInputAssociation
          xsi:type="bpmn2:tDataInputAssociation" id= "INPUTASSOCIATION1">
                                 <bpmn2: sourceRef>PROPERTY4</bpmn2:sourceRef>
                                 <bpmn2:targetRef>DATAINPUT1</bpmn2:targetRef>
                             </bpmn2extn:dataInputAssociation>
                             <bpmn2extn:dataOutputAssociation
          xsi:type="bpmn2:tDataOutputtitpittAssociation "id= "OUTPUTASSOSIATION1">
                                 <bpmn2: sourceRef>DATAOUTPUT1</bpmn2:sourceRef>
                                 <bpmn2:targetRef>PROPERTY4</bpmn2:targetRef>
                             </bpmn2extn:dataOutputAssociation>
                             <bpmn2extn:dataInputExtension
          dataRef="DATAINPUT1" order="0" purpose="parameter"/>
                         </bpmn2extn:listenerActionServiceConfig>
                    </bpmn2extn:executionListener>
```

In the description of the foregoing event listener, the XML description <htextn:taskListener class="com.huawei.bpm. bpmn.event.listener.ServiceActionDelegator" event="CREATED"> indicates that this event listener is triggered when a task to be listened to is created, the XML description </bpmn2:extension Elements>implementation="java://com.xxx.SendMessage" defines a name of a java class of a notification service, and the XML description *operationRef=* "send-OPERATION4" defines a function of sending the notification service. *<bpmn2extn:ioSpecification* defines that, when invoking, for the event listener, the specific java function corresponding to the "notification service", a BPM engine acquires content of the notification service by using context of a process, *bpmn2extn:dataInputAssociation,* so as to complete mapping binding between a context variant of the process and an input argument and return value of the notification service.
Step 202: When the business process starts running, parse a definition of the process, and when execution reaches a business activity, create a business process instance for the business activity.
   Because the event listener defined above is an activity attribute of a business activity rather than an independent business activity, a business process instance does not need to be created for the event listener, and therefore, data of the business activity can be used directly without the need of invoking data of a database.
   For example, as shown in FIG. 3, the process is an electronic leave application workflow. The electronic leave application workflow includes two business activities, which are respectively apply for leave and approve. An activity attribute is configured for the apply-for-leave business activity, where the activity attribute is an event listener. A listening start condition for the event listener is that the electronic leave application workflow is created, and a listening completion condition for the event listener is that the electronic leave application workflow is submitted successfully. Two activity attributes are configured for the approve business activity. The activity attributes are event listeners. These two event listeners are respectively a whether-rejected event listener and a whether-completed event listener. A listening start condition for the whether-rejected event listener is that a final approval person starts processing the electronic leave application workflow, and a listening completion condition for the whether-rejected event listener is that the final approval person rejects the electronic leave application workflow. A listening start condition for the whether-completed event listener is that the final approval person starts processing the electronic leave application workflow, and a listening completion condition for the whether-completed event listener is that the final approval person approves and successfully processes the electronic leave application workflow.
Step 203: A business process management engine parses, based on the created business process instance, the event listener configured for the business activity, and when the event listener learns by listening that a notification service trigger condition is met, invokes the notification service configured for the event listener, to send a notification message to a corresponding party.

When the process starts, a user creates an electronic leave application workflow. In this case, the event listener for the apply-for-leave business activity starts listening. After it is learnt by listening that the user has successfully completed creation of the electronic leave application workflow, the BPM engine invokes a message sending function of completion notification to send, to the user, a message about successful creation of the electronic leave application workflow, and the process goes to a next step, that is, the process goes to an approve activity of a final approval person. When the final approval person starts approval of the electronic leave application workflow, the event listener for the approve business activity starts listening. After it is learnt by listening that the final approval person has completed the approval of the electronic leave application workflow, the BPM engine invokes a message sending function of completion notification to send, to the user, a message about successful approval of the electronic leave application workflow. After it is learnt by listening that the final approval person has rejected the electronic leave application workflow, the BPM engine invokes a message sending function of rejection notification to send, to the user, a message about rejection of the electronic leave application workflow.

This solution provides a notification service processing method for business process management. An extension activity attribute is added for a business activity, an event listener is used as the foregoing extension activity attribute, and a notification service is directly configured for the event listener. In this way, notification service processing can be implemented. In addition, because the event listener is used as an attribute of a business activity rather than an independent business activity, a BPM engine does not need to perform process instantiation for the event listener or invoke data of a database, thereby reducing difficulty of the engine in notification service processing, and improving performance of business process processing.

A person of ordinary skill in the art may understand that all or some of the processes of the method in the embodiments may be implemented by a computer program instructing relevant hardware. The program may be stored in a computer-readable storage medium. When the program runs, the processes of the method in the embodiments are performed. The foregoing storage medium may include: a magnetic disk, an optical disc, a read-only memory (Read-Only Memory, ROM), a random access memory (Random Access Memory, RAM for short), or the like.

What are disclosed above are merely exemplary embodiments of the present invention, and are certainly not intended to limit the protection scope of the present invention. Therefore, equivalent variations made in accordance with the claims of the present invention shall fall within the scope of the present invention.

## Claims

1. A notification service processing method for business process management, wherein the method is applied to a business process management engine, and the method comprises:
when a business process starts running, parsing a definition of the process, and when execution reaches a business activity, creating a business process instance for the business activity, wherein an event listener is configured for the business activity, and at least one notification service is configured for the event listener; and
parsing, based on the created business process instance, the event listener configured for the business activity, and when the event listener learns by listening that a notification service trigger condition is met, invoking the notification service configured for the event listener, to send a notification message to a corresponding party.

2. The notification service processing method for business process management according to claim 1, before the business process starts running, further comprising: defining the business process, and performing activity attribute defining for a business activity in the business process, wherein the defined activity attribute is specifically an event listener, and at least one notification service is configured for the event listener.

3. The notification service processing method for business process management according to claim 2, wherein objects to which the event listener configured for the business activity listens comprise a creation event, a start event, or a completion event of the process, a creation event, an execution event, or a completion event of the activity, and a creation event, a completion event, or a timeout event of a human task; or an exception event of the process, and an exception event or a compensation event of the activity.

4. The notification service processing method for business process management according to claim 2, wherein the activity attribute is defined by using the following means: the extensible markup language, the C programming language, a webpage service, or a business-defined service.

5. A business process management engine, comprising:
a parsing module, configured to: when a business process starts running, parse a definition of the process, and when execution reaches a business activity, create a business process instance for the business activity, wherein an event listener is configured for the business activity, and at least one notification service is configured for the event listener; and
a notification service processing module, configured to: parse, based on the created business process instance, the event listener configured for the business activity, and when the event listener learns by listening that a notification service trigger condition is met, invoke the notification service configured for the event listener, to send a notification message to a corresponding party.

6. The business process management engine according to claim 5, comprising:
a definition module, configured to: define the business process, and perform activity attribute defining for a business activity in the business process, wherein the defined activity attribute is specifically an event listener, and at least one notification service is configured for the event listener.

7. The business process management engine according to claim 6, wherein objects to which the event listener configured for the business activity listens comprise a creation event, a start event, or a completion event of the process, a creation event, an execution event, or a completion event of the activity, and a creation event, a completion event, or a timeout event of a human task; or an exception event of the process, and an exception event or a compensation event of the activity.

8. The business process management engine according to claim 6, wherein the activity attribute is defined by using the following means: the extensible markup language, the C programming language, a webpage service, or a business-defined service.
